# EUROPEAN PATENT SPECIFICATION

(11) **EP 3 358 149 B1**
(45) Date of publication and mention of the grant of the patent: **30.12.2020**
(21) Application number: 18154691.2
(22) Date of filing: 01.02.2018
(51) Int. Cl.: F01D 17/14, F02C 9/18, F04D 27/02

(54) **BLEED VALVE WITH NEUTRAL OR CLOSING BIAS**
ENTLÜFTUNGSVENTIL MIT NEUTRAL- ODER SCHLIESSVORSPANNUNG
SOUPAPE DE PURGE SOLLICITÉE VERS UNE POSITION NEUTRALE OU FERMÉE

(30) Priority: 03.02.2017 US 201715424348
(43) Date of publication of application: 08.08.2018
(73) Proprietor: United Technologies Corporation, Farmington, CT 06032 (US)
(72) Inventor: LITTLE, Jonathan, West Hartford, CT 06117 (US)
(74) Representative: Dehns

(56) References cited:
- WO-A1-2013/192064
- DE-A1- 2 060 509
- US-A- 6 092 987
- US-A1- 2015 027 130

## Description

### FIELD

The disclosure relates generally to bleed valves in gas turbine engines.

### BACKGROUND

Multi-spool compressors may contain bleed valves between the Low and High compressor stages to improve operability of the engine. Bleed valves may be subjected to large pressure loads due to internal flow path pressure and annular area between the bleed valve seals. The loads may limit sealing capacity and/or the rate at which the bleed valve is closed. Bleed valves operating against large loads may incur greater forces during actuation between the open and/or close positions. Larger actuators may be used in such high-pressure bleed valves to produce sufficient actuation force.

In addition to actuator size, other components in the engine may be designed with greater strength and stiffness to withstand operation in high load conditions. Larger components and actuators in turn result in greater engine weight. Larger actuators also result in greater electrical or hydraulic power consumption to drive the actuators.

US 2015/027130 A1 discloses a valve for a gas turbine engine, comprising a body with bleed ports and a ring. The ring is moveable between an open position and a closed position, whereby the closed position prevents flow through the ports.

### SUMMARY

A compressor assembly as claimed in claim 1 is provided. The compressor assembly includes a compressor case disposed about an axis. A bleed valve may be disposed about the compressor case to axially translate and/or rotationally move relative to the compressor case. A first seal may be disposed in a forward seal housing of the bleed valve a first radial distance from the axis. A first sealing wall may be fixed relative to the compressor case and configured to engage the first seal. A second seal may be disposed in an aft seal housing of the bleed valve at a second radial distance from the axis. A second sealing wall may be fixed relative to the compressor case and configured to engage the second seal. The first radial distance may be substantially equal to the second radial distance such that net bias loads on the bleed valve assembly in the forward/aft directions are minimized.

In various embodiments, the bleed valve may be split circumferentially into a plurality of segments. The first seal may protrude from the forward seal housing in an aft direction. An aft-facing surface of the forward seal housing may have a surface area substantially equal to a surface area of a forward-facing surface of the aft seal housing. A bell crank may be coupled to the bleed valve. A bracket may be coupled to the bell crank and the compressor case. An actuator may be coupled to the bell crank and configured to urge the bleed valve in an axial or axial/rotational direction. Multiple support links may be coupled to the bleed valve and configured to passively support and guide the bleed valve in response to axial or axial/rotational translation of the bleed valve.

A gas turbine engine as claimed in claim 9 is also provided.

The forgoing features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates an example of a gas turbine engine, in accordance with various embodiments;
FIG. 2 illustrates a perspective view of a bleed valve in a compressor section, in accordance with various embodiments;
FIG. 3 illustrates a perspective view of a bleed valve having an actuator configured to translate the bleed valve forward and aft, in accordance with various embodiments;
FIG. 4 illustrates an elevation view of a bleed valve having annular geometry as viewed from forward looking aft, in accordance with various embodiments;
FIG. 5A illustrates a cross-sectional view of a bleed valve in a closed position having seals arranged at a selected radius from an axis of rotation, in accordance with various embodiments; and
FIG. 5B illustrates a cross-sectional view of a bleed valve in an open position having seals arranged at a selected radius from an axis of rotation, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosures, it should be understood that other embodiments may be realized and that changes may be made without departing from the scope of the disclosures. Thus, the detailed description herein is presented for purposes of illustration only and not of limitation.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

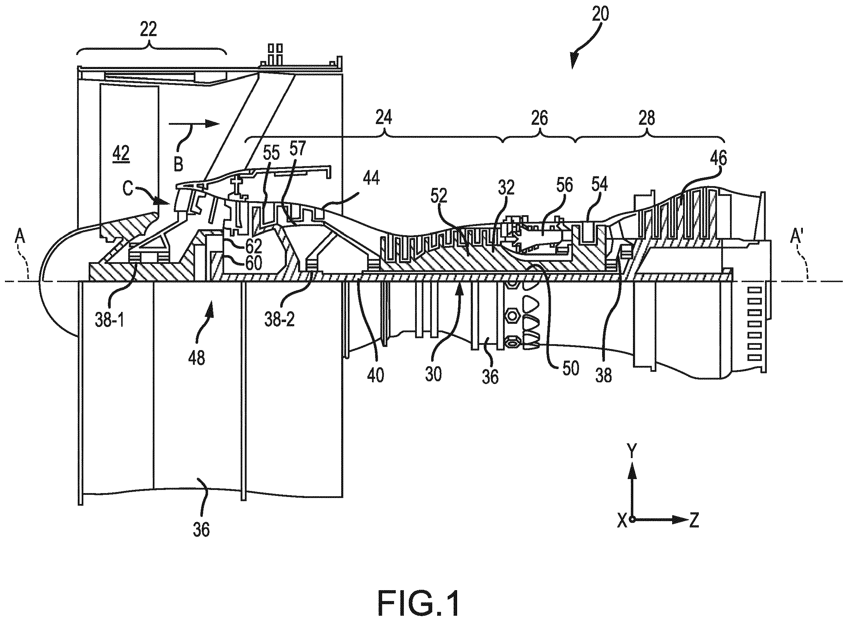

Referring now to FIG. 1, an exemplary gas turbine engine 20 is shown, in accordance with various embodiments. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive fluid (e.g., air) along a bypass-flow path B while compressor section 24 can drive coolant along a core-flow path C for compression and communication into combustor section 26 then expansion through turbine section 28. Although depicted as a two-spool turbofan gas turbine engine 20 herein, it should be understood that the concepts described herein are not limited to use with two-spool turbofans as the teachings may be applied to other types of turbine engines including turbojet, turboprop, turboshaft, or power generation turbines, with or without geared fan, geared compressor or three-spool architectures.

Gas turbine engine 20 may generally comprise a low speed spool 30 and a high speed spool 32 mounted for rotation about an engine central longitudinal axis A-A' relative to an engine static structure 36 via several bearing systems 38, 38-1, and 38-2. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low-pressure compressor 44 and a low-pressure turbine 46. Inner shaft 40 may be connected to fan 42 through a geared architecture 48 that can drive fan 42 at a lower speed than low speed spool 30. Geared architecture 48 may comprise a gear assembly enclosed within a gear housing that couples inner shaft 40 to a rotating fan structure. High speed spool 32 may comprise an outer shaft 50 that interconnects a high-pressure compressor 52 and high-pressure turbine 54. Airfoils 55 coupled to a rotor of high-pressure turbine may rotate about the engine central longitudinal axis A-A' or airfoils 55 coupled to a stator may be rotationally fixed about engine central longitudinal axis A-A'. Airfoils 55 coupled to a stator may be held in place by inner shroud 57.

A combustor 56 may be located between high-pressure compressor 52 and high-pressure turbine 54. Inner shaft 40 and outer shaft 50 may be concentric and rotate via bearing systems 38 about the engine central longitudinal axis A-A', which is collinear with their longitudinal axes. As used herein, a "high-pressure" compressor or turbine experiences a higher pressure than a corresponding "low-pressure" compressor or turbine.

The core airflow along core-flow path C may be compressed by low-pressure compressor 44 then high-pressure compressor 52, mixed and burned with fuel in combustor 56, then expanded over high-pressure turbine 54 and low-pressure turbine 46. Turbines 46, 54 rotationally drive the respective low speed spool 30 and high speed spool 32 in response to the expansion.

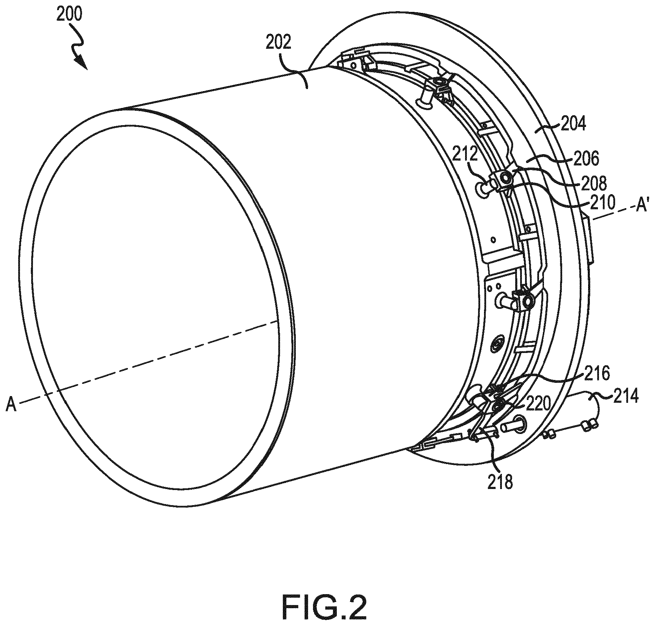

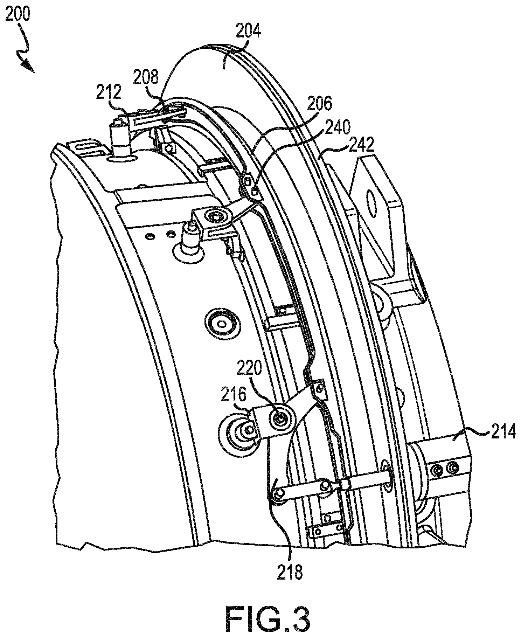

With reference to FIGs. 2 and 3, a compressor assembly 200 is shown having a bleed valve assembly 206 according to various embodiments. Compressor assembly 200 includes a compressor case 202 having an annular geometry. Bleed valve assembly 206 is disposed about compressor case 202 and has an annular geometry. Bleed valve assembly 206 is able to translate forward and aft relative to compressor case 202.

Bleed valve assembly 206 may be coupled to compressor case 202 by bracket 212 and support links 208 of pivotal joint 210. Bracket 212 may be coupled to compressor case 202. Support links 208 may be pivotally coupled to bracket 212. Support links 208 may also be coupled to bleed valve assembly 206 by fasteners 240 to passively support and/or guide bleed valve assembly 206 in response to linear/rotational translation. Pivotal joint 210 may enable axial translation/rotation of bleed valve assembly 206 in response to support link 208 pivoting relative to bracket 212.

In various embodiments, bell crank 218 may be coupled to bracket 216 to form pivotal joint 220. Bracket 216 may be coupled to compressor case 202. Bell crank 218 may also be coupled to actuator 214. Actuator 214 may urge bell crank 218 to rotate about pivotal joint 220 and drive axial translation/rotational movement of bleed valve assembly 206. Bleed valve 204 of bleed valve assembly 206 may be proximate flange 242 to define a bleed duct between the bleed valve and flange. In response to axial translation of bleed valve assembly 206, the distance between flange 242 and bleed valve 204 may increase allowing gas to escape through the bleed duct defined by flange 242 and bleed valve 204.

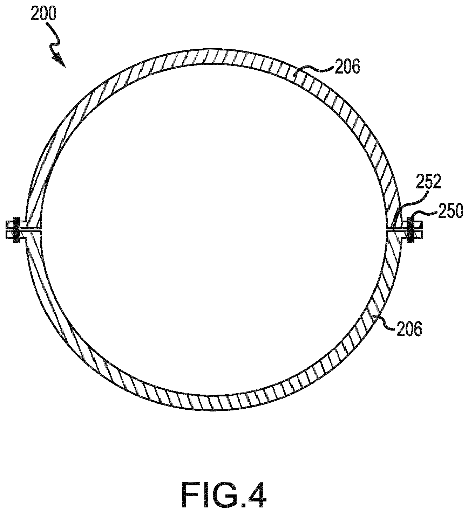

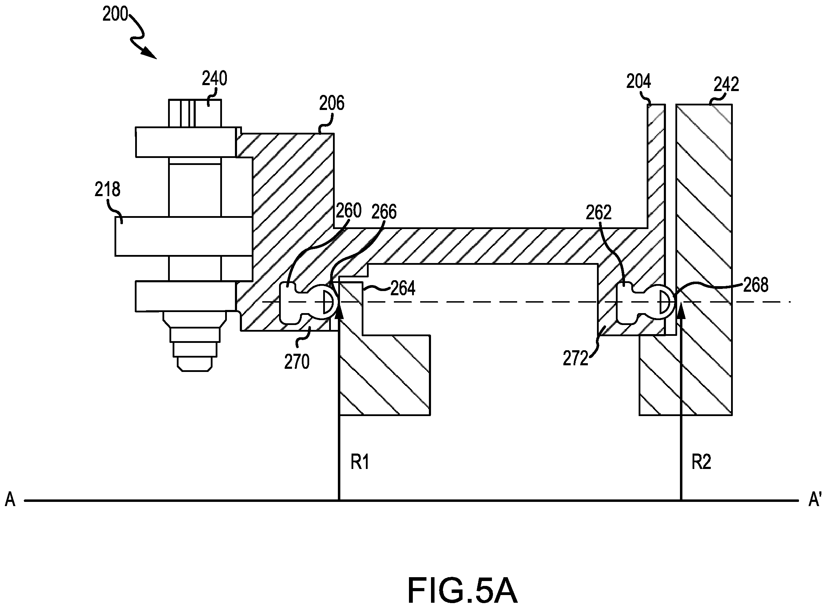

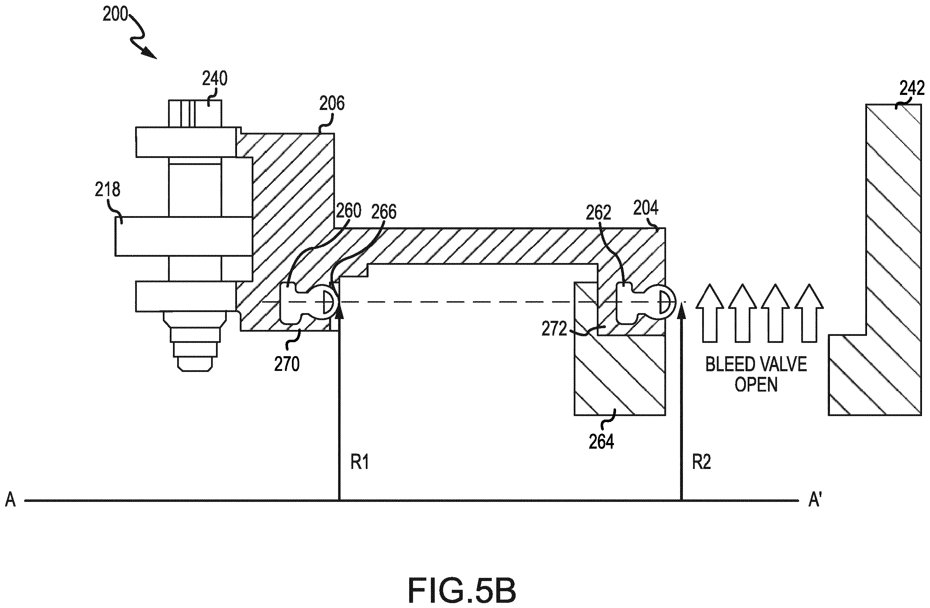

Referring now to FIG. 4, bleed valve assembly 206 of compressor assembly 200 is shown from forward looking aft, in accordance with various embodiments. Bleed valve assembly 206 may be split into multiple segments joined by fasteners 250 along splits 252. Split bleed valve may enable installation and maintenance of the bleed valve (as shown in FIG. 5) about compressor cases installed in a gas turbine engine.

Referring now to FIGs. 5A and 5B, cross-sectional views of compressor assembly 200 are shown in closed and open positions, respectively, in accordance with various embodiments. Compressor assembly includes bell crank 218 coupled to bleed valve assembly 206 by fastener 240. Bleed valve assembly 206 is configured to translate in an axial direction along and/or rotationally move about axis A-A'. Forward sealing wall 266 and aft sealing wall 268 are each coupled to compressor case 202 (of FIG. 2). Forward sealing wall 266 and aft sealing wall 268 are thus fixed in the axial direction relative to the compressor assembly with bleed valve assembly 206 configured to translate axially and/or rotationally move relative to sealing walls.

In various embodiments, seal 260 retained in forward seal housing 270 of bleed valve assembly 206 may translate axially towards forward sealing wall 266 of internal flange 264. Seal 260 may protrude from forward seal housing 270 in the aft direction. Seal 260 may also compress in response to contact applied by forward sealing wall 266 caused by translation of bleed valve 204 in the aft direction. Seal 260 and/or forward seal housing 270 is located a radial distance R1 from the axis A-A'. R1 represents the effective radius of the forward seal 260 between the high pressure in the duct and the lower external pressure.

In various embodiments, seal 262, which is retained in aft seal housing 272 of bleed valve assembly 206 may translate axially towards aft sealing wall 268 of flange 242. Seal 262 may compress in response to contact applied by aft sealing wall 268 caused by translation of bleed valve 204 in the aft direction. Seal 262 and/or aft seal housing 272 is located a radial distance R2 from the axis A-A'. R2 represents the effective radius of the aft seal 262 between the high pressure in the duct and the lower external pressure.

In various embodiments, the difference between the duct pressure and lower external pressure may be applied to surfaces of bleed valve assembly 206 proportionally to the surface area exposed to the pressure of seal 262/aft seal housing 272 and/or seal 260/forward seal housing 270. Stated another way, the axial load applied to bleed valve assembly 206 may be a function of the pressure inside the flow path and the area it is acting on, which is an annulus between the forward and aft bleed valve seals. In that regard, the aft-facing surface of forward seal housing 270 and seal 260 may be subject to compressor pressure in the forward direction, and the forward facing surface of aft seal housing 272 and seal 262 may be subject to compressor pressure in the aft direction. The surface areas may thus be selected making the surface areas represented by R1 and R2 similar and tend to minimize net bias loads on bleed valve assembly 206 in the forward/aft directions.

In various embodiments, radius R1 and radius R2 is thus selected to arrange the bleed valve assembly 206 into a neutral bias, closed bias, and/or open bias based on the pressure difference acting on the support structures and seals. As depicted, seal 260 and seal 262 are located a substantially equal radial distance from axis A-A' (i.e., R1 is equal to R2). The term substantially equal refers to distances that are within 5% of one another. The substantially equal radial distance results in a neutral bias of bleed valve assembly 206.

By neutralizing and/or selectively biasing the pressure loads acting on the bleed valve, the actuator size and hydraulic pressure associated with sufficient driving force may be reduced. Lighter actuators may thus be used in engines with seals arranged as described herein. Actuators may also draw less power from the engine to generate the desired actuation force. In addition the linkage loads may be reduced and along with the wear resulting from use over time. System durability and longevity may thus be improved using the seals described herein. The stiffness of the mounting components can be reduced and made lighter because in response to the reduction of the max load condition. Splitting of the valve to facilitate assembly further offers improved maintenance time and expenses by providing access to the bleed valve seals.

The scope of the disclosures is accordingly to be limited by nothing other than the appended claims.

## Claims

1. A compressor assembly (200), comprising:
a compressor case (20) disposed about an axis (A-A');
a bleed valve (204) disposed about the compressor case and configured to axially translate and/or rotationally move relative to the compressor case;
a first seal (260) disposed in a forward seal housing (270) of the bleed valve, wherein the first seal is disposed at a first radial distance (R₁) from the axis;
a first sealing wall (266) fixed relative to the compressor case and configured to engage the first seal;
a second seal (262) disposed in an aft seal housing (272) of the bleed valve, wherein the second seal is disposed at a second radial distance (R₂) from the axis; and
a second sealing wall (268) fixed relative to the compressor case and configured to engage the second seal;
**characterized in that**;
the first radial distance is substantially equal to the second radial distance such that net bias loads on the bleed valve in the forward/aft directions are minimized.

2. The compressor assembly (200) of claim 1, wherein the bleed valve (204) is split circumferentially into a plurality of segments.

3. The compressor assembly (200) of claim 1 or 2, wherein the first seal (260) protrudes from the forward seal housing (270) in an aft direction.

4. The compressor assembly (200) of claim 1, 2 or 3, wherein an aft-facing surface of the forward seal housing (270) has a surface area substantially equal to a surface area of a forward-facing surface of the aft seal housing (272).

5. The compressor assembly (200) of any preceding claim, comprising a bell crank (218) coupled to the bleed valve (204).

6. The compressor assembly (200) of claim 5, further comprising a bracket (212) coupled to the bell crank (218) and the compressor case (202).

7. The compressor assembly (200) of claim 5 or 6, further comprising an actuator (214) coupled to the bell crank (218) and configured to urge the bleed valve (204) in an axial direction.

8. The compressor assembly (200) of claim 5, 6 or 7, further comprising a support link (208) coupled to the bleed valve (204) and configured to passively support the bleed valve in response to at least one of axial translation or rotational movement of the bleed valve.

9. A gas turbine engine (20), comprising:
a compressor section (24) configured to rotate about an axis (A-A'), the compressor section comprising the compressor assembly (200) of any preceding claim;
a combustor section (26) aft of the compressor section and in fluid communication with the compressor section; and
a turbine section (28) aft of the combustor section and in fluid communication with the combustor section.

## Patentansprüche

1. Verdichteranordnung (200), umfassend:
ein Verdichtergehäuse (20), das um eine Achse (A-A') angeordnet ist;
ein Zapfventil (204), das um das Verdichtergehäuse angeordnet ist und so konfiguriert ist, dass es sich axial verschiebt und/oder durch Drehung relativ zum Verdichtergehäuse bewegt;
eine erste Dichtung (260), die in einem vorderen Dichtungsgehäuse (270) des Zapfventils angeordnet ist, wobei die erste Dichtung in einem ersten radialen Abstand (R₁) von der Achse angeordnet ist;
eine erste Dichtungswand (266), die relativ zum Verdichtergehäuse angebracht ist und so konfiguriert ist, dass sie die erste Dichtung in Eingriff nimmt;
eine zweite Dichtung (262), die in einem hinteren Dichtungsgehäuse (272) des Zapfventils angeordnet ist, wobei die zweite Dichtung in einem zweiten radialen Abstand (R₂) von der Achse angeordnet ist; und
eine zweite Dichtungswand (268), die relativ zum Verdichtergehäuse angebracht ist und so konfiguriert ist, dass sie die zweite Dichtung in Eingriff nimmt;
**dadurch gekennzeichnet, dass**;
der erste radiale Abstand im Wesentlichen mit dem zweiten radialen Abstand identisch ist, so dass Nettovorspannungslasten auf dem Zapfventil in der Richtung nach vorne/nach hinten minimiert werden.

2. Verdichteranordnung (200) nach Anspruch 1, wobei das Zapfventil (204) in Umfangsrichtung in eine Vielzahl von Segmenten zerteilt ist.

3. Verdichteranordnung (200) nach Anspruch 1 oder 2, wobei die erste Dichtung (260) aus dem vorderen Dichtungsgehäuse (270) in einer Richtung nach hinten vorragt.

4. Verdichteranordnung (200) nach Anspruch 1, 2 oder 3, wobei eine nach hinten weisende Fläche des vorderen Dichtungsgehäuses (270) einen Oberflächenbereich aufweist, der im Wesentlichen mit einem Oberflächenbereich einer nach vorne weisenden Fläche des hinteren Dichtungsgehäuses (272) identisch ist.

5. Verdichteranordnung (200) nach einem der vorstehenden Ansprüche, umfassend einen Winkelhebel (218), der mit dem Zapfventil (204) gekoppelt ist.

6. Verdichteranordnung (200) nach Anspruch 5, ferner einen Bügel (212) umfassend, der mit dem Winkelhebel (218) und dem Verdichtergehäuse (202) gekoppelt ist.

7. Verdichteranordnung (200) nach Anspruch 5 oder 6, ferner ein Stellglied (214) umfassend, das an den Winkelhebel (218) gekoppelt ist und so konfiguriert ist, dass es das Zapfventil (204) in eine axiale Richtung drückt.

8. Verdichteranordnung (200) nach Anspruch 5, 6 oder 7, ferner ein Tragglied (208) umfassend, das an das Zapfventil (204) gekoppelt ist und so konfiguriert ist, dass es das Zapfventil passiv als Reaktion auf mindestens eines aus einer axialen Verschiebung oder Drehbewegung des Zapfventils stützt.

9. Gasturbinentriebwerk (20), umfassend:
einen Verdichterabschnitt (24), der so konfiguriert ist, dass er sich um eine Achse (A-A') dreht, wobei der Verdichterabschnitt die Verdichteranordnung (200) nach einem der vorstehenden Ansprüche umfasst;
einen Brennkammerabschnitt (26) hinter dem Verdichterabschnitt und in Fluidkommunikation mit dem Verdichterabschnitt; und
einen Turbinenabschnitt (28) hinter dem Brennkammerabschnitt und in Fluidkommunikation mit dem Brennkammerabschnitt.

## Revendications

1. Ensemble compresseur (200), comprenant :
un carter de compresseur (20) disposé autour d'un axe (A-A') ;
une soupape de purge (204) disposée autour du carter de compresseur et conçue pour se déplacer axialement et/ou bouger en rotation par rapport au carter de compresseur ;
un premier joint (260) disposé dans un boîtier de joint avant (270) de la soupape de purge, dans lequel le premier joint est disposé à une première distance radiale (R₁) de l'axe ;
une première paroi d'étanchéité (266) fixe par rapport au carter de compresseur et conçue pour mettre en prise le premier joint ;
un second joint d'étanchéité (262) disposé dans un boîtier de joint arrière (272) de la soupape de purge, dans lequel le second joint est disposé à une seconde distance radiale (R₂) de l'axe ; et
une seconde paroi d'étanchéité (268) fixe par rapport au carter de compresseur et conçue pour venir en prise avec le second joint ;
**caractérisé en ce que** :
la première distance radiale est sensiblement égale à la seconde distance radiale de sorte que les charges de polarisation nettes sur la soupape de purge dans les directions avant/arrière sont réduites au maximum.

2. Ensemble compresseur (200) selon la revendication 1, dans lequel la soupape de purge (204) est divisée circonférentiellement en une pluralité de segments.

3. Ensemble compresseur (200) selon la revendication 1 ou 2, dans lequel le premier joint (260) fait saillie depuis le boîtier de joint avant (270) dans une direction arrière.

4. Ensemble compresseur (200) selon la revendication 1, 2 ou 3, dans lequel une surface orientée vers l'arrière du boîtier de joint avant (270) a une superficie sensiblement égale à une superficie d'une surface tournée vers l'avant du boîtier de joint arrière (272).

5. Ensemble compresseur (200) selon une quelconque revendication précédente, comprenant une manivelle à cloche (218) couplée à la soupape de purge (204).

6. Ensemble compresseur (200) selon la revendication 5, comprenant en outre un support (212) couplé à la manivelle (218) et au carter de compresseur (202).

7. Ensemble compresseur (200) selon la revendication 5 ou 6, comprenant en outre un actionneur (214) couplé à la manivelle (218) et conçu pour pousser la soupape de purge (204) dans une direction axiale.

8. Ensemble compresseur (200) selon la revendication 5, 6 ou 7, comprenant en outre une liaison de support (208) couplée à la soupape de purge (204) et conçue pour supporter passivement la soupape de purge en réponse à au moins l'un d'une translation axiale ou d'un mouvement de rotation de la soupape de purge.

9. Moteur à turbine à gaz (20), comprenant :
une section de compresseur (24) conçue pour tourner autour d'un axe (A-A'), la section de compresseur comprenant l'ensemble compresseur (200) selon une quelconque revendication précédente ;
une section de chambre de combustion (26) à l'arrière de la section de compresseur et en communication fluidique avec la section de compresseur ; et
une section de turbine (28) à l'arrière de la section de chambre de combustion et en communication fluidique avec la section de chambre de combustion.
